# EUROPÄISCHE PATENTSCHRIFT

(11) **EP 1 048 903 B1**
(45) Veröffentlichungstag und Bekanntmachung des Hinweises auf die Patenterteilung: **20.12.2006**
(21) Anmeldenummer: 00107765.0
(22) Anmeldetag: 11.04.2000
(51) Int. Cl.: F24D 3/14

(54) **Halteschiene für Rohre von Fussbodenheizungen sowie Verfahren und Vorrichtung zur Herstellung der Halteschiene**
Holding bars for under floor heating tubes and method and apparatus for manufacturing the bars
Raies de fixation pour tubes de chauffage par le sol ansi que procédé et appareil pour manufacturer les raies

(30) Priorität: 28.04.1999 DE 19919317
(43) Veröffentlichungstag der Anmeldung: 02.11.2000
(73) Patentinhaber: Krumrey, Siegfried, 51515 Kürten (DE)
(72) Erfinder: Krumrey, Siegfried, 51515 Kürten (DE)
(74) Vertreter: Lippert, Stachow & Partner

(56) Entgegenhaltungen:
- DE-A- 3 237 311
- DE-A- 3 506 397
- DE-A- 4 335 670
- DE-A- 4 420 688
- GB-A- 2 046 397
- US-A- 5 101 566

## Beschreibung

Die Erfindung betrifft ein Verfahren und eine Vorrichtung zur Herstellung von Halteschienen für Rohre von Fußbodenheizungen, wobei nach dem Verfahren erwärmtes plastisches Kunststoffmaterial durch eine Matritze gepresst wird, die dieses zu einem langgestreckten Kunststoffprofil mit einer Bodenplatte sowie wenigstens einer vorzugsweise zwei von dieser senkrecht und im Abstand voneinander hervorstehenden Halteplatten formt, wobei wenigstens eine Stanzvorrichtung mit einem quer zur Extrusionsrichtung vor und zurück bewegbaren Schneidwerkzeug vorgesehen ist und mit der Stanzvorrichtung nach der Extrusion des Kunststoffprofils fluchtend gegenüberliegende Ausnehmungen zur Aufnahme der Heizungsrohre aus den beabstandeten Halteplatten ausgeklinkt werden, die bis an die Bodenplatte des Kunststoffprofils heranreichen.

Mit "ausklinken " wird hier eine Stanzung entlang einer offenen Schnittlinie bezeichnet. Offen ist die Schnittlinie, weil die gestanzte Ausnehmung an einer freien Werkstückkante des Kunststoffprofils liegt. Durch das Ausklinken wird der freien Werkstückkante eine neue Kontur verliehen. Es handelt sich um einen Scherschneidevorgang, mit dem ein Kunststoffstück vollständig aus der Halteplatte herausgeschnitten. Bei jedem Scherschnitt entstehen deckungsgleiche Abfallbutzen, die der Form der Ausnehmung entsprechen.

Solche Halteschienen werden für die Verlegung von Heizungsrohren von Fußbodenheizungen verwendet. Die Heizungsrohre werden üblicherweise in Schleifen gelegt und mit Hilfe der Halteschienen fixiert. Nachfolgend wird Estrich über die Heizungsrohre gegossen. Ziel ist es, die Heizungsrohre mit möglichst wenig Estrich einzubetten.

Aus diesem Grund müssen die Heizungsrohre in einem möglichst geringen Abstand über einem Untergrund, beispielsweise einer Bodenisolierung, angeordnet werden. Die DIN 18560 T2 empfiehlt, Heizungsrohre für Fußbodenheizungen in einer Höhe von höchstens 5 mm oberhalb einer Bodenisolierung zu verlegen.

Aus der DE 43 35 670 A1 ist eine gattungsgemäße Halteschiene bekannt sowie ein gattungsgemäßes Verfahren und eine Vorrichtung zur Durchführung des Verfahrens. Die Besonderheit der bekannten Halteschiene besteht in der rechteckigen Form der Ausnehmungen, die bis an die Bodenplatte des Kunststoffprofils heranreichen. Außerdem ist eine Vorrichtung beschrieben, bei der die rechteckigen Ausnehmungen mit einem Stanzwerkzeug hergestellt werden, das von außen an der entsprechenden Halteplatte/Schenkel der Halteschiene angreift. Es ist das grundsätzliche Problem beschrieben nämlich, dass Heizungsrohre nah an die Bodenplatte heranreichen müssen, um bei der Herstellung des Fußbodens Estrich einzusparen. Dabei geht die DE 43 35 670 A1 von einem Stand der Technik aus, bei dem die Ausnehmungen noch in einen Abstand oberhalb der Bodenplatte endeten und für die Stanzung der Ausnehmungen ein Gegenlager zwischen den Schenkeln der Halteschiene benötigt wurde. In dem Bereich zwischen der Bodenplatte und dem Grund der Ausnehmung wies das Gegenlager seine schmalste Stelle auf. Eine weitere Annäherung der Ausnehmung an die Bodenplatte und somit eine weitere Schwächung der Schmalstelle des Gegenlagers erschien nicht möglich, weil der schmale Rand unter dem Druck des Stanzwerkzeugs zerbräche. Ausgehend von diesem Stand der Technik bietet die DE 43 35 670 A1 eine Lösung an, die darin besteht, auf ein Gegenlager völlig zu verzichten. So soll ein gerader Trennschnitt genau bis an den Grund der Ausnehmung heranreichen. Die Bodenplatte selbst ist nach dieser Idee als Gegenhalt für das Stanzwerkzeug gedacht.

Die DE 32 37 311 C2 betrifft eine U-förmige Halteschiene mit Ausnehmungen in Halteplatten, wobei die Ausnehmungen in einem Abstand über einer Bodenplatte liegen.

Die US 5,101,566 beschreibt einen Fensterrahmen mit Tropflöchern sowie ein Werkzeug zur Herstellung der Tropflöcher. Das Werkzeug hat ein Schneidwerkzeug und einen Gegenhalter. Zur Herstellung der Tropflöcher ragt das Schneidewerkzeug zwischen die hervorstehenden Platten eines U-Profils bis an dessen Boden und schneidet von Innen nach Außen.

Der Erfindung liegt die Aufgabe zugrunde, eine Halteschiene mit gestanzten bis zum Boden der Halteschiene reichenden Ausnehmungen zu schaffen, um Heizungsrohre von Fußbodenheizungen tiefliegend zu montieren sowie ein Verfahren und eine Vorrichtung zur Herstellung der Halteschienen vorzuschlagen, wobei die Halteschiene einfacher herstellbar sein soll als nach der bekannten Methode.

Erfindungsgemäß wird die Aufgabe durch ein Verfahren gelöst, bei dem ein Gegenhalter für das Schneidwerkzeug vorgesehen ist, dass mit dem Schneidwerkzeug eine Ausnehmung gestanzt wird, die über den größten Teil ihres Umfangs an die Form des zu haltenden Heizungsrohres angepasst ist, wobei das Schneidwerkzeug zwischen die hervorstehenden Halteplatten ragt und ein abzuschneidendes Kunststoffstück einer Halteplatte von der Innenseite eines beispielsweise U-förmigen Kunststoffprofils nach außen abgeschert wird.

Die mit dem neuen Verfahren herstellbare Halteschiene verbessert den Sitz der Verbindung gegenüber der aus der DE 43 35 670 A1 bekannten Halteschiene, weil sie sich über den größten Teil des Umfangs an ein zu fixierendes Heizungsrohr anschmiegt, wohingegen die bekannte Halteschiene zur Fixierung eines runden Heizungsrohres eine rechteckige Ausnehmung vorsieht. Darüber hinaus ist nach dem vorgeschlagenen Verfahren jede Ausnehmung mit der üblichen Genauigkeit herstellbar, die ein Stanzverfahren mit Schneidwerkzeug und Gegenhalter bietet. Ausbrüche an den Scherflächen werden vermieden.

Mit dieser Maßnahme werden im wesentlichen zwei große Vorteile erreicht. Als erstes können die Scheitelpunkte der runden Ausnehmungen der Halteplatten bis an die Innenseite der Bodenplatte der Halteschiene herangebracht werden. Zweitens kann der auf der Außenseite der Halteplatten angeordnete Gegenhalter entlang der gesamten Schnittlinie der Ausnehmung als breite Platte ausgebildet sein, die eine hohe Standfestigkeit aufweist.

Das neue Verfahren ermöglicht erstmals eine optimale Anordnung gestanzter runder Ausnehmungen in den Halteplatten einer Halteschiene für Heizungsrohre von Fußbodenheizungen. Es wird ein minimaler Bodenabstand der verlegten Heizungsrohre erreicht.

Der geringe Abstand zum Untergrund, der mit der erfindungsgemäßen Halteschiene realisierbar ist, legt auch eine Verwendung derselben für eine Wandheizung nahe. Die Putzschicht, in der die Heizungsrohre einer Wandheizung eingebettet werden, kann sehr dünn gehalten werden.

Eine vorteilhafte Weiterbildung des Verfahrens sieht vor, daß die Stanzvorrichtung von einer Startposition ausgehend parallel zur Extrusionsrichtung und mit der Geschwindigkeit, mit der das Kunststoffprofil aus der Matrize gepreßt wird, mitbewegt wird und währenddessen die Ausnehmung ausklinkt, und daß das Schneidwerkzeug nach erfolgtem Schnitt aus der Ausnehmung herausbewegt und die Stanzvorrichtung für den nächsten Schnitt entgegen der Extrusionsrichtung in ihre Startposition zurückbewegt wird. Dies ermöglicht eine sehr rationelle Fertigung der Halteschiene. Vorzugsweise wird das Kunststoffprofil zu einem Zeitpunkt gestanzt, während es noch warm und nicht völlig ausgehärtet ist. Der Kunststoff läßt sich in diesem Zustand leicht scherschneiden und verschleißt das Schneidwerkzeug weniger als im ausgehärteten Zustand.

Günstigerweise schneidet eine Stanzvorrichtung eine der Halteplatten der Halteschiene und wird die gegenüberliegende Halteplatte von einer zweiten versetzt angeordneten Stanzvorrichtung geschnitten. Die Stanzvorrichtungen dieser Ausführungsform können sehr einfach konstruiert und robust sein und daher eine sehr lange Stanzzeit aufweisen.

Eine weitere Fortbildung dieser Konstruktion sieht vor, daß die Stanzvorrichtung mehrere mit Abstand nebeneinander angeordnete Schneidwerkzeuge und zugeordnete Gegenhalter aufweist, die in einem Arbeitsschritt mehrere Ausnehmungen schneiden. Dadurch wird die Haltbarkeit der einzelnen Schneidwerkzeuge erhöht und die Produktionsanlage kann für längere Zeitabschnitte kontinuierlich betrieben werden.

Eine andere Ausführung des vorgeschlagenen Verfahrens sieht vor, daß die Ausnehmungen in den gegenüberliegenden Halteplatten der Halteschiene von einer in beide Richtungen wirkenden Stanzvorrichtung ausgeklinkt werden. Hierfür ist ein Schneidwerkzeug vorgesehen, das zu beiden Halteplatten hin Schneidkeile aufweist und zunächst in einer Vorwärtsbewegung eine Halteplatte und danach in einer Rückwärtsbewegung die gegenüberliegende Halteplatte ausklinkt. Alternativ können auch zwei jeweils in eine Richtung wirkende Schneidwerkzeuge von einer gemeinsamen Antriebseinrichtung angetrieben werden und die gegenüberliegenden Halteplatten ausklinken.

Darüber hinaus wird eine Vorrichtung zur Durchführung des Verfahrens vorgeschlagen, wobei die Halteschiene aus einem L-förmigen oder U-förmigen Kunststoffprofil besteht, welches eine Bodenplatte und senkrecht hierzu und einander gegenüberliegend Halteplatten aufweist. Es ist wenigstens eine Stanzvorrichtung mit einem quer zum Kunststoffprofil wirkenden Schneidwerkzeug und einem Gegenhalter für das Schneidwerkzeug vorgesehen. Das Schneidwerkzeug quert, zwischen die Halteplatten greifend, eine der Halteplatten und weist der Bodenplatte zugewandt eine Rundung auf, deren Scheitelpunkt bis an die Bodenplatte des Kunststoffprofils heranreicht, wobei der Gegenhalter auf der Außenseite der Halteplatte derart anliegt, dass er sich entlang der gesamten Schnittlinie der Ausnehmung über diese hinaus erstreckt. Das aus der Matrize gepreßte Kunststoffprofil wird kontinuierlich über die langgestreckte Aufnahme an der Stanzvorrichtung vorbeigeschoben.

Zur Lagerung der Stanzvorrichtung ist zweckdienlich ein Pendelschlitten vorgesehen, der einen parallel zur Extrusionsrichtung des Kunststoffprofils liegenden Pendelbereich aufweist, innerhalb dessen er während des Stanzens mit der Extrusionsgeschwindigkeit des Kunststoffprofils vorwärts bewegbar und danach zurück bewegbar ist. Während der mit der Bewegung des Kunststoffprofils synchronen Vorwärtsbewegung des Pendelschlittens schneidet die Stanzvorrichtung eine Ausnehmung in eine der Halteplatten. Nachdem das Schneidwerkzeug quer zur Extrusionsrichtung aus der Ausnehmung zurückbewegt worden ist, bewegt sich der Pendelschlitten schnell an den Anfang seines Pendelbereichs zurück und wiederholt den beschriebenen Bewegungszyklus.

Zweckmäßig ist das Schneidwerkzeug über einen Hydraulik- oder einen Pneumatikzylinder quer zur Extrusionsrichtung des Kunststoffprofils vor und zurück bewegbar.

Weiterhin günstig ist es, wenn die Stanzvorrichtung Führungselemente zur Geradführung des Schneidwerkzeugs aufweist, die nahezu bis an die Schneidebene des Schneidwerkzeugs heranreichen. Durch diese Konstruktion wird das Schneidwerkzeug stets in einer exakten Flucht mit dem Gegenhalter geführt, so daß sich kein erhöhter Verschleiß durch Aufeinandertreffen des Schneidkeils des Schneidwerkzeugs mit einer Kante des Gegenhalters ergibt.

Eine andere Ausführungsform der Vorrichtung sieht vor, daß die Stanzvorrichtung zwischen den Halteplatten der Halteschiene ein beidseitig wirkendes oder zwei einseitig wirkende gegenüberliegende Schneidwerkzeuge aufweist, die mittels einer gemeinsamen Antriebseinrichtung bewegbar sind, wie beispielsweise einem Exzenter, einer schiefen Ebene, einem Hebel etc.

Die nachfolgend beschriebenen Beispiele für Halteschienen sind nicht Gegenstand der beanspruchten Erfindung.

Mit dem vorgeschlagenen Verfahren und der vorgeschlagenen Vorrichtung läßt sich herstellen: Eine Halteschiene für Heizungsrohre von Fußbodenheizungen, mit einem langgestreckten U-förmigen Kunststoffprofil, das eine Bodenplatte und senkrecht hierzu und einander gegenüberliegend Halteplatten aufweist, die einstückig an der Bodenplatte angeformt sind sowie mit fluchtend in den Halteplatten gegenüberliegenden Ausnehmungen zur Aufnahme der Heizungsrohre, wobei die Ausnehmungen zum Rand der Halteplatten offen sind, bis an die Bodenplatte heranreichen und mit einem Schneidwerkzeug hergestellte Scherfläche aufweisen. Hierbei sind die Ausnehmungen über den größten Teil ihres Umfangs an die Form der zu haltenden Heizungsrohre angepasst und die Scherflächen sind durch Stanzung mit dem Schneidwerkzeug von der Innenseite des Kunststoffprofils nach außen abgeschert.

Zur einfachen Handhabung der Halteschiene weisen die Ausnehmungen zu den hervorstehenden Kanten der Halteplatten hin Abschrägungen auf. Durch die Abschrägungen hindurch läßt sich ein Heizungsrohr in die Ausnehmung drücken. Wenn das Rohr mit seiner dicksten Stelle den engsten Teil der Ausnehmung überwunden hat, schnappt es tiefer in die Ausnehmung und ist so fest gehalten. Bevorzugt sind die Halteplatten auf ihren einander zugekehrten Innenseiten aus einem Kunststoffmaterial ausgebildet und weisen auf ihren Außenseiten ein andersartiges Kunststoffmaterial auf. Die Kombination zweier.Kunststoffmaterialien verbessert die Bearbeitbarkeit des Kunststoffprofils. Beim Ausschneiden beispielsweise ergeben sich keine ausgebrochenen Ränder. Vorteilhafterweise ist auf den Außenseiten der Halteplatten ein weicheres Kunststoffmaterial vorgesehen als auf den Innenseiten. Der sich durch das Scherschneiden der Halteplatten ergebende Grat an den Außenseiten der Halteplatten birgt keine Verletzungsgefahr bei der Handhabung der Halteschiene, weil das den Grat bildende Kunststoffmaterial weichelastisch ist. Auch für die Verlegung der Heizungsrohre ist es vorteilhaft, daß an den Ein- und Austrittsstellen der Heizungsrohre in die Halteschiene ein weichelastisches Kunststoffmaterial vorhanden ist, weil dieses die Kerbwirkung an den Heizungsrohren reduziert.

In Zusammenhang mit den beiden unterschiedlichen Kunststoffmaterialien ergibt sich ein weiterer Vorteil. Durch das Stanzen von der Außenseite der Halteplatten wirkt das Schneidwerkzeug nämlich gegen das härtere der beiden Kunststoffmaterialien. Von diesem löst sich der herausgeschnittene Abfallbutzen gut ab. Das bekannte Stanzen von außen nach innen hatte demgegenüber stets den Nachteil, daß die Abfallbutze mit ihrer weichelastischen Seite an dem Schneidwerkzeug festklebt.

Nachstehend ist die Erfindung in der Zeichnung beispielhaft veranschaulicht und anhand der Figuren detailliert beschrieben.
Es zeigen:
- Fig. 1: eine Schnittdarstellung einer Vorrichtung zur Herstellung einer langgestreckten Halteschiene für Heizungsrohre von Fußbodenheizungen, wobei sich das Schneidwerkzeug in seiner Ausgangsstellung befindet,
- Fig. 2: die Vorrichtung gemäß Fig. 1, wobei das Schneidwerkzeug gerade eine Schnittbewegung ausgeführt hat und eine Ausnehmung ausgeklinkt ist,
- Fig. 3: die Ansicht gemäß III-III aus Fig. 2,
- Fig. 4: eine Seitenansicht auf eine erfindungsgemäße Halteschiene,
- Fig. 5: eine Schnittdarstellung gemäß V-V aus Fig. 4,
- Fig. 6: eine Schnittdarstellung gemäß schnitt VI-VI gemäß Fig. 4,
- Fig. 7: zwei Stanzvorrichtungen mit mehreren Schneidwerkzeugen.

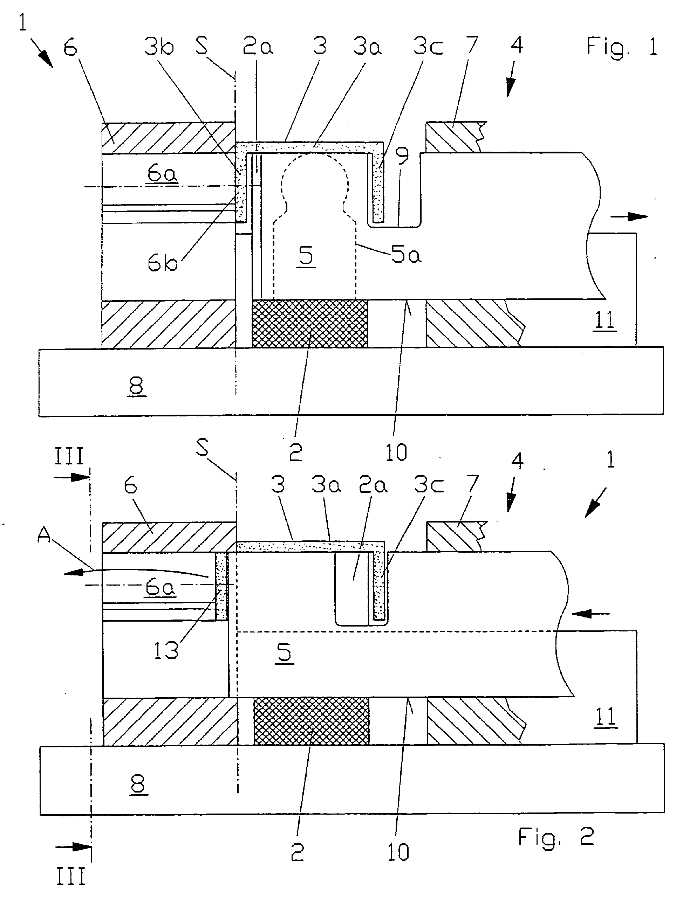

Nach der Zeichnung weist die Vorrichtung 1 zur Herstellung einer langgestreckten Halteschiene für Heizungsrohre von Fußbodenheizungen eine langgestreckte Aufnahme 2 für ein durch eine Matritze extrudiertes Kunststoffprofil 3 sowie eine Stanzvorrichtung 4 mit einem quer zu dem Kunststoffprofil 3 wirkenden vor und zurück bewegbaren Schneidwerkzeug 5 und einem Gegenhalter 6 für das Schneidwerkzeug 5 auf. Das Kunststoffprofil 3 der Halteschiene weist einen U-förmigen Querschnitt auf. Es ist mit einer Bodenplatte 3a sowie mit zwei von dieser hervorstehenden Halteplatten 3b und 3c versehen. In der vorliegenden Ausführungsform der Vorrichtung 1 liegt das Kunststoffprofil 3 mit den hervorstehenden Halteplatten 3b und 3c nach unten weisend auf der langgestreckten Aufnahme 2. Letztere weist in dem Bereich des Schneidwerkzeugs eine Durchbrechung 2a auf. Der Querschnitt des Schneidwerkzeugs ist in der Fig. 1 anhand der gestrichelten Linie 5a angedeutet.

Der Gegenhalter 6 ist mit einer Öffnung 6a versehen. Diese weist eine Gegenhaltekante 6b auf, die der Schnittlinie der zu stanzenden Ausnehmung entspricht.

In der vorliegenden Ausführungsform quert das Schneidwerkzeug 5 eine der Halteplatten 3c des Kunststoffprofils 3 der Halteschiene und reicht zwischen den Halteplatten 3b und 3c bis an die Bodenplatte 3a des Kunststoffprofils 3 heran. Das Schneidwerkzeug 5 ist, wie schematisch durch ein Lagerteil 7 angedeutet, geradgeführt. Es liegt in einer Flucht mit dem Gegenhalter 6. Der Gegenhalter 6, die langgestreckte Aufnahme 2 für das Kunststoffprofil 3, das Lagerstück 7 sowie ein Hydraulikzylinder (nicht dargestellt) sind auf einem Pendelschlitten 8 angebracht. Der Pendelschlitten 8 wird während der Stanzung beziehungsweise der Schneidbewegung des Schneidwerkzeugs 5 parallel zur Extrusionsrichtung des Kunststoffprofils 3 und mit der gleichen Geschwindigkeit, mit der das Kunststoffprofil 3 aus der Matrize gepreßt wird, mitbewegt. Nach der Stanzung wird das Schneidwerkzeug 5 aus der in Fig. 2 dargestellten Position quer zur Extrusionsrichtung des Kunststoffprofils 3 zurückgezogen und dann der Pendelschlitten 8 schnell in seine Startposition zurückbewegt. Der Pendelschlitten 8 führt also zwischen einer Startposition und einer Endposition Pendelbewegungen aus, wobei er während des Schneidens relativ langsam, nämlich mit der Extrusionsgeschwindigkeit des Kunststoffprofils 3 vorwärtsbewegt und nach dem Schneiden für einen neuen Bewegungszyklus schnell in die Startposition zurückbewegt wird.

Eine zweite Stanzvorrichtung (nicht dargestellt) ist auf der gegenüberliegenden Seite des Kunststoffprofils 3 auf dem Pendelschlitten 8 angebracht. Diese führt räumlich ein wenig versetzt zu der ersten Stanzvorrichtung 4 den gleichen Bewegungszyklus aus.

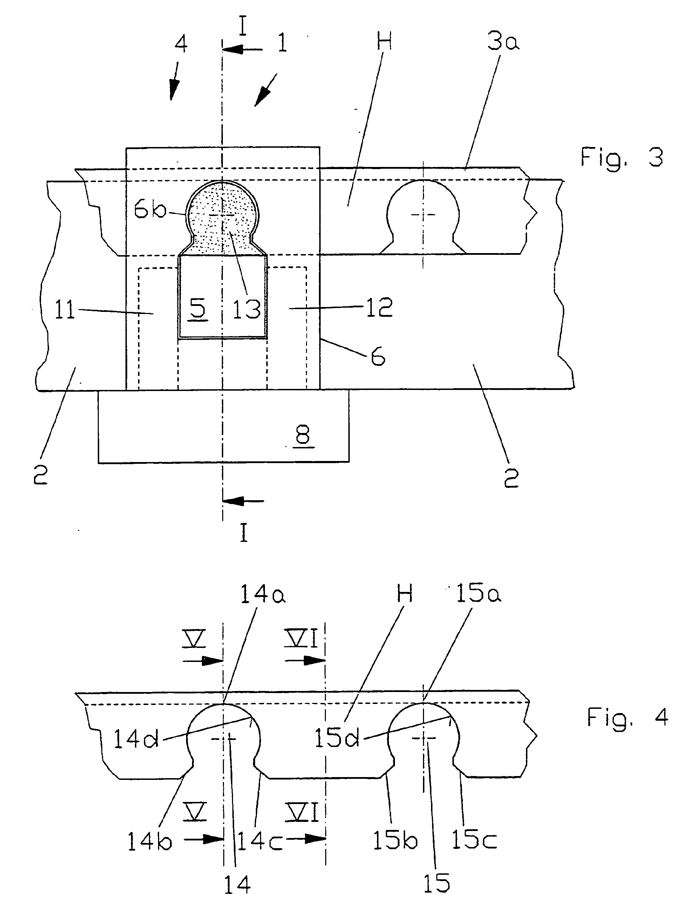

Die Fig. 3 der Zeichnung zeigt eine rückwärtige Ansicht auf den Gegenhalter 6. In diesem Ausführungsbeispiel ist die Öffnung 6a des Gegenhalters 6 nach unten länger als die auszuklinkende Ausnehmung der Halteplatte 3b. Da die freie Kante der Halteplatte 3b keines Gegenhalts bedarf, braucht der Gegenhalter 6 in diesem Bereich keine Gegenhaltekante.

Um die Halteplatten 3b von der Innenseite her ausklinken zu können, quert das Schneidwerkzeug 5 die gegenüberliegende Halteplatte 3c des Kunststoffprofils 3. In dem Bereich der letzteren Halteplatte 3c weist das Schneidwerkzeug 5 eine Aussparung 9 auf. Diese ist so groß, daß sich das Schneidwerkzeug 5 für eine Schneidbewegung ausreichend weit vor und zurück bewegen läßt, ohne dabei an der Halteplatte 3c anzustoßen. Auf der dem Pendelschlitten 8 zugewandten Unterseite weist das Schneidwerkzeug 5 eine gerade Auflagefläche 10 auf, die sich bis zu der Schneidkante 5a des Schneidwerkzeugs 5 erstreckt. Links und rechts des Schneidwerkzeugs 5 sind Führungselemente 11 und 12 zur Geradführung desselben angeordnet, die nahezu bis an die Schneidebene S der Stanzvorrichtung 4 heranreichen. Das Schneidwerkzeug 5 ist damit sehr exakt geführt und fluchtet genau mit der Öffnung 6a des Gegenhalters 6. Die Öffnung 6a des Gegenhalters 6 ist so geformt, daß das Schneidwerkzeug 5 ein Stück weit in den Gegenhalter 6 eintauchen kann.

Anhand des schraffierten Bereichs der Fig. 3 ist die Abfallbutze 13 des Kunststoffprofils 3 angedeutet, die von dem Schneidwerkzeug 5 in Richtung des Pfeils A nach außen ausgeworfen wird.

Fig. 4 zeigt eine erfindungsgemäße Halteschiene H mit runden, gestanzten Ausnehmungen 14 und 15, wobei die Scheitelpunkte 14a und 15a der Ausnehmungen 14 und 15 exakt bis an die Innenseite der Bodenplatte 3a des Kunststoffprofils 3 heranreichen.

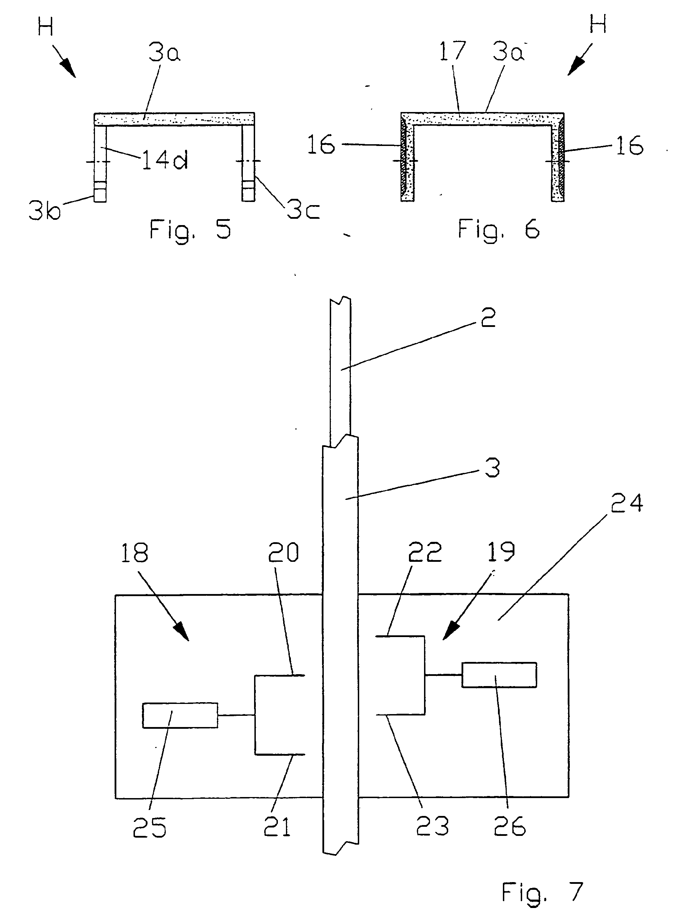

Auch in Fig. 5 ist erkennbar, daß der Scheitelpunkt 14a der Ausnehmung 14 exakt auf dem Niveau der Innenseite der Bodenplatte 3a des Kunststoffprofils liegt.

In Fig. 6 ist einmal ein bevorzugter Aufbau eines extrudierten Kunststoffprofils 3 dargestellt. Dieser weist ein weichelastisches Kunststoffmaterial 16 an den Außenseiten der Halteplatten 3b und 3c auf. Die Innenseiten der Halteplatten 3b und 3c sowie die Bodenplatte 3a sind aus einem hartelastischenKunststoffmaterial 17 hergestellt. Zur Herstellung wird einfacherweise ein kombinierter Spritzkopf verwendet (nicht dargestellt). In diesen wird aus einer Schneckenpresse zunächst das hartelastische Kunststoffmaterial 17 gefördert. Über eine zweite Schneckenpresse wird dann das zweite weichelastische Kunststoffmaterial 16 eingebracht und beide Kunststoffmaterialien 16 und 17 durch die Matrize koextrudiert.

Zwei Stanzvorrichtungen 18 und 19 mit mehreren Schneidwerkzeugen sind in der schematischen Fig. 7 zu sehen. Hierbei werden mittels vier Schneidwerkzeugen 20 und 21 sowie 22 und 23 jeweils gleichzeitig vier Ausnehmungen in die gegenüberliegenden Halteplatten der Halteschiene geschnitten. Die Stanzvorrichtungen 18 und 19 sind gegeneinander versetzt auf einem Pendelschlitten 24 angebracht. Durch den Versatz werden Kollisionen der sich gegenüberstehenden Schneidwerkzeuge vermieden. Zum Antrieb der Stanzvorrichtungen 18 und 19 sind die Hydraulikzylinder 25 beziehungsweise 26 vorgesehen.

Zur einfachen Handhabung der Halteschiene H weisen die Ausnehmungen 14 und 15 zu den hervorstehenden freien Kanten der Halteplatten hin Abschrägungen 14b und 14c sowie 15b und 15c auf.

Durch die Abschrägungen 14b und 14c sowie 15b und 15c hindurch läßt sich ein Heizungsrohr (nicht dargestellt) in die Ausnehmung 14 beziehungsweise 15 drücken. Wenn das Heizungsrohr mit seiner dicksten Stelle den engsten Teil der Ausnehmung 14 beziehungsweise 15 überwunden hat, schnappt es tiefer in die Ausnehmung ein und ist so fest gehalten.

### Bezugszeichenliste

- 1: Vorrichtung
- 2: langgestreckte Aufnahme
- 2a: Durchbrechung
- 3: Kunststoffprofil
- 3a: Bodenplatte
- 3b: Halteplatte
- 3c: Halteplatte
- 4: Stanzvorrichtung
- 5: Schneidwerkzeug
- 5a: Querschnitt
- 6: Gegenhalter
- 6a: Öffnung
- 6b: Gegenhaltekante
- 7: Lagerteil
- 8: Pendelschlitten
- 9: Aussparung
- 10: Auflagefläche
- 11: Führungselement
- 12: Führungselement
- 13: Abfallbutze
- 14: Ausnehmung
- 14a: Scheitelpunkt
- 14b: Abschrägung
- 14c: Abschrägung
- 14d: Scherfläche
- 15: Ausnehmung
- 15a: Scheitelpunkt
- 15b: Abschrägung
- 15c: Abschrägung
- 15d: Scherfläche
- 16: weichelastisches Kunststoffmaterial
- 17: hartelastisches Kunststoffmaterial
- 18: Stanzvorrichtung
- 19: Stanzvorrichtung
- 20: Schneidwerkzeug
- 21: Schneidwerkzeug
- 22: Schneidwerkzeug
- 23: Schneidwerkzeug
- 24: Pendelschlitten
- 25: Hydraulikzylinder
- 26: Hydraulikzylinder
- A: Pfeil
- H: Halteschiene
- S: Schneidebene

## Patentansprüche

1. Verfahren zur Herstellung einer Halteschiene (H) für Heizungsrohre von Fußbodenheizungen, bei dem erwärmtes plastisches Kunststoffmaterial (16, 17) durch eine Matritze gepresst wird, die dieses zu einem langgestreckten Kunststoffprofil (3) mit einer Bodenplatte (3a) sowie wenigstens einer vorzugsweise zwei von dieser senkrecht und im Abstand voneinander hervorstehenden Halteplatten (3b, 3c) formt, wobei wenigstens eine Stanzvorrichtung (4) mit einem quer zur Extrusionsrichtung vor und zurück bewegbaren Schneidwerkzeug (5) vorgesehen ist und mit der Stanzvorrichtung (4) nach der Extrusion des Kunststoffprofils (3) fluchtend gegenüberliegende Ausnehmungen (14, 15) zur Aufnahme der Heizungsrohre aus den beabstandeten Halteplatten (3b, 3c) ausgeklinkt werden, die bis an die Bodenplatte (3a) des Kunststoffprofils (3) heranreichen, **dadurch gekennzeichnet, dass** ein Gegenhalter (6) für das Schneidwerkzeug (5) vorgesehen ist, dass mit dem Schneidwerkzeug (5) eine Ausnehmung (14, 15) stanzbar ist, die über den größten Teil ihres Umfangs an die Form des zu haltenden Heizungsrohres angepasst ist, wobei das Schneidwerkzeug (5) zwischen die hervorstehenden Halteplatten (3b, 3c) ragt und ein abzuschneidendes Kunststoffstück einer Halteplatte (3b, 3c) von der Innenseite des Kunststoffprofils (3) nach außen abgeschert wird.

2. Verfahren nach Anspruch 1,**dadurch gekennzeichnet, daß** die Stanzvorrichtung (4) von einer Startposition ausgehend parallel zur Extrusionsrichtung und mit der Geschwindigkeit, mit der das Kunststoffprofil (3) aus der Matritze gepresst wird, mitbewegt wird und während dessen die Ausnehmung (14, 15) ausklinkt, und daß das Schneidwerkzeug (5) nach erfolgtem Schnitt aus der Ausnehmung (14, 15) heraus bewegt und die Stanzvorrichtung (4) für den nächsten Schnitt entgegen der Extrusionsrichtung in ihre Startposition zurückbewegt wird.

3. Verfahren nach Anspruch 1 oder 2, **dadurch gekennzeichnet, daß** eine Stanzvorrichtung (4) eine der Halteplatten (3b) der Halteschiene (H) schneidet und die gegenüberliegende Halteplatte (3c) von einer zweiten versetzt angeordneten Stanzvorrichtung geschnitten wird.

4. Verfahren nach einem der Ansprüche 1 bis 3, **dadurch gekennzeichnet, daß** die Stanzvorrichtung (18, 19) mehrere mit Abstand nebeneinander angeordnete Schneidwerkzeuge (20, 21, 22, 23) und zugeordnete Gegenhalter aufweist, die in einem Arbeitsschritt mehrere Ausnehmungen schneiden.

5. Verfahren nach Anspruch 1 oder 2, **dadurch gekennzeichnet, daß** die Ausnehmungen (14, 15) in den gegenüberliegenden Halteplatten (3b, 3c) der Halteschiene (3) von einer in beide Richtungen wirkenden Stanzvorrichtung ausgeklinkt werden.

6. Vorrichtung zur Herstellung einer langgestreckten Halteschiene für Heizungsrohre von Fußbodenheizungen, wobei die Halteschiene aus einem, extrudierten Kunststoffprofil (3) besteht, welches eine Bodenplatte (3a) und senkrecht hierzu und einander gegenüberliegend Halteplatten (3b, 3c) aufweist, mit wenigstens einer Stanzvorrichtung (4) mit einem quer zur Halteschiene (H) wirkenden Schneidwerkzeug (5), **dadurch gekennzeichnet, dass** ein Gegenhalter (6) für das Schneidwerkzeug (5) vorgesehen ist, wobei das Schneidwerkzeug (5) - zwischen die Halteplatten (3b, 3c) reichend - eine der Halteplatten (3b, 3c) quert und der Bodenplatte (3a) zugewandt eine Rundung aufweist, deren Scheitelpunkt bis an die Bodenplatte (3a) heranreicht, und wobei der Gegenhalter (6) auf der Außenseite der Halteplatte (3b, 3c) derart anliegt, dass er sich entlang der gesamten Schnittlinie der Ausnehmung über diese hinaus erstreckt.

7. Vorrichtung nach Anspruch 6, **dadurch gekennzeichnet, daß** zur Lagerung der Stanzvorrichtung (4) ein Pendelschlitten (8) vorgesehen ist, daß der Pendelschlitten (8) einen parallel zur Extrusionsrichtung des Kunststoffprofils (3) liegenden Pendelbereich aufweist, innerhalb dessen er während des Stanzens mit der Extrusionsgeschwindigkeit des Kunststoffprofils (3) vorwärtsbewegbar und danach zurückbewegbar ist.

8. Vorrichtung nach Anspruch 6 oder 7, **dadurch gekennzeichnet, daß** die langgestreckte Aufnahme (2) für die Halteschiene (H) in dem Bereich der Stanzvorrichtung (4) eine Durchbrechung (2a) aufweist.

9. Vorrichtung nach einem der Ansprüche 6 bis 8, **dadurch gekennzeichnet, daß** das Schneidwerkzeug (5) über einen Hydraulik- oder Pneumatikzylinder quer zur Extrusionsrichtung des Kunststoffprofils (3) vor und zurück bewegbar ist.

10. Vorrichtung nach einem der Ansprüch 6 bis 9, **dadurch gekennzeichnet, daß** die Stanzvorrichtung (4) Führungselemente (11, 12) zur Geradführung des Schneidwerkzeugs (5) aufweist, die nahezu bis an die Schneidebene (S) der Stanzvorrichtung (4) heranreichen.

11. Vorrichtung nach Anspruch 6 bis 10, **dadurch gekennzeichnet, daß** die Stanzvorrichtung (4) zwischen den Halteplatten (3b, 3c) der Halteschiene (H) ein beidseitig wirkendes oder zwei einseitig wirkende gegenüberliegende Schneidwerkzeuge aufweist, die mittels einer gemeinsamen Antriebseinrichtung bewegbar sind.

## Claims

1. Method for manufacturing a holding bar (H) for underfloor heating tubes, where heated polymer melt (16, 17) is extruded through a die that shapes it into an elongated plastic profile (3) with a base plate (3a) and at least one, preferably two, holding plates (3b, 3c), extending perpendicularly from it and spaced apart from each other, where at least one punching device (4) with a cutting tool (5) that can be moved back and forth transversely to the extrusion direction is provided, and recesses (14, 15), which are aligned opposite each other and reach down to the base plate (3a) of the plastic profile (3), for accommodating the heating tubes are notched out of the spaced holding plates (3b, 3c) by the punching device (4) following extrusion of the plastic profile (3), **characterised in that** a pressure pad (6) is provided for the cutting tool (5), and **in that** the cutting tool (5) is capable of punching a recess (14, 15), the greater part of the perimeter of which is adapted to the shape of the heating tube to be held, where the cutting tool (5) reaches between the projecting holding plates (3b, 3c) and a piece of plastic to be cut off a holding plate (3b, 3c) is sheared off towards the outside from the inside of the plastic profile (3).

2. Method according to Claim 1, **characterised in that**, beginning from a starting position, the punching device (4) is moved parallel to the extrusion direction and at the speed at which the plastic profile (3) is extruded from the die, notching the recess (14, 15) during the process, and **in that**, after making the cut, the cutting tool (5) is moved out of the recess (14, 15) and the punching device (4) is moved in the direction opposite to the extrusion direction, back into its starting position for the next cut.

3. Method according to Claim 1 or 2, **characterised in that** one punching device (4) cuts one of the holding plates (3b) of the holding bar (H), and the opposite holding plate (3c) is cut by a second punching device located in an offset position.

4. Method according to one of Claims 1 to 3, **characterised in that** the punching device (18, 19) displays several cutting tools (20, 21, 22, 23) and associated pressure pads, which are arranged a distance apart next to each other and cut several recesses in a single work step.

5. Method according to Claim 1 or 2, **characterised in that** the recesses (14, 15) in the opposite holding plates (3b, 3c) of the holding bar (H) are notched by a punching device acting in both directions.

6. Apparatus for manufacturing an elongated holding bar for underfloor heating tubes, where the holding bar consists of an extruded plastic profile (3) displaying a base plate (3a) and holding plates (3b, 3c) perpendicular thereto and opposite to each other, with at least one punching device (4) with a cutting tool (5) acting transversely to the holding bar (H), **characterised in that** a pressure pad (6) is provided for the cutting tool (5), where the cutting tool (5) - reaching between the holding plates (3b, 3c) - crosses one of the holding plates (3b, 3c) and, on the side facing towards the base plate (3a), displays a rounded area, the vertex of which reaches up to the base plate (3a), and where the pressure pad (6) rests against the outer side of the holding plate (3b, 3c) in such a way that it extends beyond the cutting line of the recess along the full length thereof.

7. Apparatus according to Claim 6, **characterised in that** a reciprocating carriage (8) is provided for mounting the punching device (4), and **in that** the reciprocating carriage (8) displays a reciprocating area lying parallel to the extrusion direction of the plastic profile (3), within which it can be moved forwards at the extrusion speed of the plastic profile (3) during punching and subsequently moved back.

8. Apparatus according to Claim 6 or 7, **characterised in that** the elongated mount (2) for the holding bar (H) displays an opening (2a) in the area of the punching device (4).

9. Apparatus according to one of Claims 6 to 8, **characterised in that** the cutting tool (5) can be moved back and forth, transversely to the extrusion direction of the plastic profile (3), by means of a hydraulic or pneumatic cylinder.

10. Apparatus according to one of Claims 6 to 9, **characterised in that** the punching device (4) displays guide elements (11, 12) for straight-line motion of the cutting tool (5) that reach almost up to the cutting plane (S) of the punching device (4).

11. Apparatus according to Claims 6 to 10, **characterised in that**, between the holding plates (3b, 3c) of the holding bar (H), the punching device (4) displays one bilaterally-acting, or two unilaterally-acting, opposite cutting tools that can be moved by means of a common drive device.

## Revendications

1. Procédé pour fabriquer un rail de retenue (H) pour des tuyaux de chauffage de chauffages par le sol, au niveau duquel de la matière artificielle plastique chauffée (16, 17) est comprimée par une matrice qui forme celle-ci en un profilé en matière artificielle s'étendant en longueur (3) avec une plaque de fond (3a) ainsi qu'au moins une, de préférence, deux plaques de maintien (3b, 3c) en saillie, espacées l'une de l'autre et perpendiculaires à celle-ci, sachant qu'il est prévu au moins un dispositif de découpage (4) avec un outil de coupe (5) pouvant aller en avant et en arrière, transversalement au sens d'extrusion et que des évidements alignés, se faisant face (14, 15), sont encochés avec le dispositif de découpage (4) après extrusion du profilé en matière artificielle (3) pour recevoir les tuyaux de chauffage en provenance des plaques de maintien (3b, 3c) mutuellement distantes qui arrivent jusque contre la plaque de maintien (3a) du profilé en matière artificielle (3), **caractérisé en ce qu'il** est prévu un contre appui (6) pour l'outil de coupe (5), **en ce qu'**avec l'outil de coupe (5), il est possible de découper un évidement (14, 15) qui, par la plus grande partie de sa périphérie, épouse la forme du tuyau de chauffage à maintenir, sachant que l'outil de coupe (5) dépasse entre les plaques de maintien en saillie (3b, 3c) et qu'une pièce en matière artificielle à découper d'une plaque de maintien (3b, 3c) est cisaillée du côté intérieur du profilé en matière artificielle (3) vers l'extérieur.

2. Procédé selon la revendication 1, **caractérisé en ce que** le dispositif de découpage (4) est déplacé, en partant d'une position de départ, parallèlement au sens d'extrusion et à la vitesse à laquelle le profilé en matière artificielle (3) est pressé à partir de la matrice et qu'il encoche, pendant cela, l'évidement (14, 15) et **en ce que** l'outil de coupe (5) sort de l'évidement (14, 15) une fois la coupe effectuée et que le dispositif de découpage (4) est ramené dans sa position de départ, contrairement au sens d'extrusion, pour la coupe suivante.

3. Procédé selon la revendication 1 ou 2, **caractérisé en ce qu'**un dispositif de découpage (4) découpe une des plaques de maintien (3b) du rail de retenue (H) et que la plaque de maintien située en face (3c) est coupée par un deuxième dispositif de découpage disposé de façon décalée.

4. Procédé selon l'une quelconque des revendications 1 à 3, **caractérisé en ce que** le dispositif de découpage (18, 19) présente plusieurs outils de coupe (20, 21, 22, 23) disposés en juxtaposition et espacés et des contre appuis associés qui découpent plusieurs évidements dans une étape de travail.

5. Procédé selon la revendication 1 ou 2, **caractérisé en ce que** les évidements (14, 15) sont encochés dans les plaques de maintien (3b, 3c), se faisant face, du rail de retenue (H) par un dispositif de découpage opérant dans les deux sens.

6. Dispositif pour fabriquer un rail de retenue s'étendant en longueur pour des tuyaux de chauffage de chauffages par le sol, sachant que le rail de retenue est composé d'un profilé extrudé en matière artificielle (3), lequel présente une plaque de fond (3a) et des plaques de maintien (3b, 3c) se faisant face et perpendiculaires à celle-ci, avec au moins un dispositif de découpage (4), muni d'un outil de coupe (5) opérant transversalement au rail de retenue (H), **caractérisé en ce qu'**il est prévu un contre appui (6) pour l'outil de coupe (5), sachant que l'outil de coupe (5), entre les plaques de maintien (3b, 3c), traverse une des plaques de maintien (3b, 3c) et présente un arrondi orienté vers la plaque de fond (3a), dont le sommet arrive jusque contre la plaque de fond (3a) et sachant que le contre appui (6) est en contact sur le côté extérieur de la plaque de maintien (3b, 3c), de telle sorte qu'il s'étend le long de toute la ligne de coupe de l'évidement au-delà de celui-ci.

7. Dispositif selon la revendication 6, **caractérisé en ce qu'**il est prévu un chariot allant et venant (8) pour placer le dispositif de découpage (4), que le chariot allant et venant (8) présente une zone de mouvement de va et vient située parallèlement au sens d'extrusion du profilé en matière artificielle (3), au sein de laquelle il peut être, pendant la découpe, à la vitesse d'extrusion du profilé en matière artificielle (3), déplacé en avant puis en arrière.

8. Dispositif selon la revendication 6 ou 7, **caractérisé en ce que** le logement s'étendant en longueur (2) pour le rail de retenue (H) présente une découpe (2a) dans la zone du dispositif de découpage (4).

9. Dispositif selon l'une quelconque des revendications 6 à 8, **caractérisé en ce que** l'outil de coupe (5) peut être déplacé en avant et en arrière, transversalement au sens d'extrusion du profilé en matière artificielle (3), par un cylindre pneumatique ou hydraulique.

10. Dispositif selon l'une quelconque des revendications 6 à 9, **caractérisé en ce que** le dispositif de découpage (4) présente, pour le guidage droit de l'outil de coupe (5), des éléments de guidage (11, 12) qui arrivent presque jusqu'au niveau de coupe (S) du dispositif de découpage (4).

11. Dispositif selon l'une quelconque des revendications 6 à 10, **caractérisé en ce que** le dispositif de découpage (4) présente entre les plaques de maintien (3b, 3c) du rail de retenue (H), un outil de coupe opérant de part et d'autre ou deux outils de coupe se faisant face, opérant d'un seul côté et pouvant être déplacés au moyen d'un dispositif d'entraînement commun.
